# EUROPEAN PATENT SPECIFICATION

(11) **EP 2 793 310 B1**
(45) Date of publication and mention of the grant of the patent: **25.07.2018**
(21) Application number: 12856593.4
(22) Date of filing: 11.12.2012
(51) Int. Cl.: H01M 2/10, H01M 10/61, H01M 10/65, H01M 10/64

(54) **CELL MODULE PROVIDED WITH CELL BLOCK**
ZELLMODUL MIT EINEM ZELLBLOCK
MODULE DE CELLULE POURVU D'UN BLOC DE CELLULES

(30) Priority: 16.12.2011 JP 2011275634
(43) Date of publication of application: 22.10.2014
(73) Proprietor: Panasonic Intellectual Property Management Co., Ltd., Osaka-shi, Osaka 540-6207 (JP)
(72) Inventor: TEMMYO, Hiroshi, Osaka 540-6207 (JP); OKUTANI, Oose, Osaka 540-6207 (JP)
(74) Representative: Grünecker Patent- und Rechtsanwälte PartG mbB
(86) International application number: PCT/JP2012/007908
(87) International publication number: WO 2013/088702

(56) References cited:
- EP-A1- 2 187 473
- WO-A1-2011/096032
- JP-A- 2003 109 655
- US-A1- 2009 004 555
- US-A1- 2010 151 309

## Description

### TECHNICAL FIELD

The present disclosure relates to battery modules, and more particularly to a battery module including battery blocks each including a holder in which a plurality of cells are housed.

### BACKGROUND ART

In recent years, the technique of forming modules of battery assemblies obtained by connecting cells in parallel and/or in series, and using the battery modules for various applications has been suggested. When a battery module is used in a low-temperature environment, cells may not operate normally. For this reason, when a battery module is used in a low-temperature environment, cells need to be warmed.

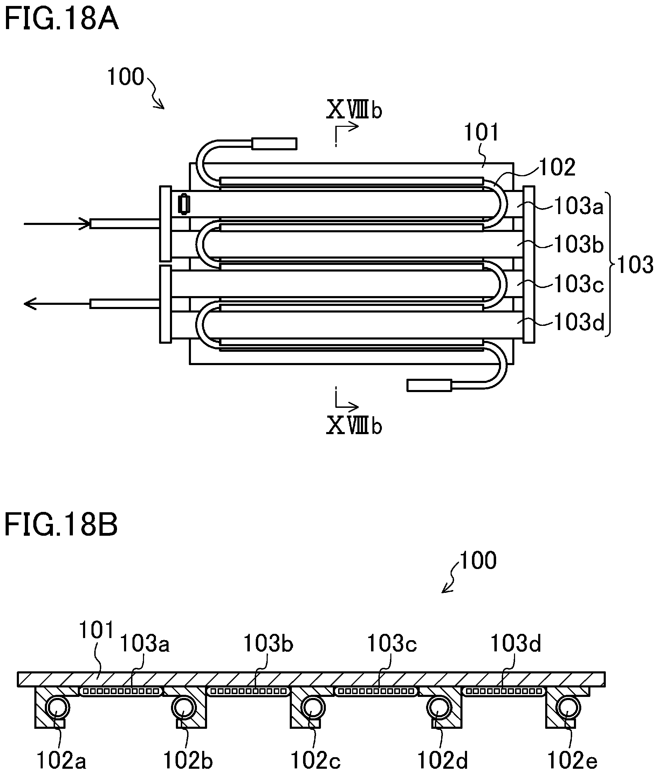

For example, PATENT DOCUMENT 1 has suggested the technique of heating and cooling a battery assembly. A battery module described in PATENT DOCUMENT 1 will be described hereinafter with reference to FIGS. 18A and 18B. FIGS. 18A and 18B illustrate the structure of a plate included in the battery module described in PATENT DOCUMENT 1. FIG. 18A is a plan view of the plate, and FIG. 18B is a cross-sectional view taken along the line XVIIIb-XVIIIb illustrated in FIG. 18A.

The battery module described in PATENT DOCUMENT 1 includes a battery assembly including a plurality of battery cells, and a plate 100 brought into contact with the battery assembly to heat and cool the battery assembly. The battery assembly includes the battery cells that are arranged and assembled into a generally box-like shape, and the plate 100 is in contact with a lower surface of the generally box-like battery assembly. As illustrated in FIGS. 18A and 18B, the plate 100 includes a plate-like heat transfer member 101, a heater 102, and medium piping 103 through which refrigerant flows.

The medium piping 103 includes plate-like pipes 103a-103d. As illustrated in FIG. 18A, the plate-like pipes 103a-103d are arranged in columns, and each extend in a column direction.

As illustrated in FIG. 18A, the heater 102 is serpentine, and has portions extending in the column direction (see the reference characters 102a-102e in FIG. 18B). As illustrated in FIG. 18B, the plate-like pipes 103a-103d are each placed between a corresponding adjacent pair of the portions 102a-102e of the heater 102. As such, the portions 102a-102e of the heater 102 and the plate-like pipes 103a-103d are alternately arranged.

For example, PATENT DOCUMENT 2 has suggested the technique of reducing variations in the degree of heating among a plurality of secondary batteries included in a battery assembly. A heater-equipped battery assembly structure described in PATENT DOCUMENT 2 will be described hereinafter with reference to FIG. 19. FIG. 19 is a cross-sectional view illustrating the structure of the heater-equipped battery assembly structure described in PATENT DOCUMENT 2.

As illustrated in FIG. 19, the heater-equipped battery assembly structure described in PATENT DOCUMENT 2 includes a battery assembly including a plurality of secondary batteries 200 and an accommodation case 201 in which the secondary batteries 200 are accommodated, a first heater 202a, and a second heater 202b. The accommodation case 201 includes a spaced portion 201p that is spaced from the secondary batteries 200 with a space S located therebetween. The first heater 202a and the second heater 202b are provided on portions of an outer surface of the spaced portion 201p.

In the heater-equipped battery assembly structure described in PATENT DOCUMENT 2, heat is transferred from the first and second heaters 202a and 202b to the spaced portion 201p to heat the spaced portion 201p, and air in the space S is heated through the heated spaced portion 201p. The heated air is in contact with the secondary batteries 200 to heat the secondary batteries 200. As such, the secondary batteries 200 are indirectly heated through the spaced portion 201p and the air in the space S to reduce variations in the degree of heating among the secondary batteries 200. PATENT DOCUMENT 3 discloses a plurality of stacked battery modules 110, each module accommodating a plurality of cells. A holding spacer 130 in which a heat generating unit is embedded, is disposed between two adjacent battery modules. Each holding spacer 130 has projections contacting the surfaces of the modules and defining cooling paths.

### CITATION LIST

### PATENT DOCUMENTS

PATENT DOCUMENT 1: Japanese Unexamined Patent Publication No. 2011-175911
PATENT DOCUMENT 2: Japanese Unexamined Patent Publication No. 2008-53149
PATENT DOCUMENT 3: US2010/0151309

### SUMMARY OF THE INVENTION

### TECHNICAL PROBLEM

However, the technique described in PATENT DOCUMENT 1 and the technique described in PATENT DOCUMENT 2 have the following problems.

In the technique described in PATENT DOCUMENT 1, the plate 100 (i.e., a temperature controller) configured to heat and cool the battery assembly is in contact with only a portion of the battery assembly (specifically, the lower surface of the generally box-like battery assembly). For this reason, the battery cells included in the battery assembly cannot be uniformly heated, leading to significant temperature differences among the battery cells. If, in order to solve the problem, for example, a plurality of temperature controllers are used so as to be brought into contact with corresponding surfaces of the generally box-like battery assembly, the battery module is upsized to make it difficult to reduce footprint requirements.

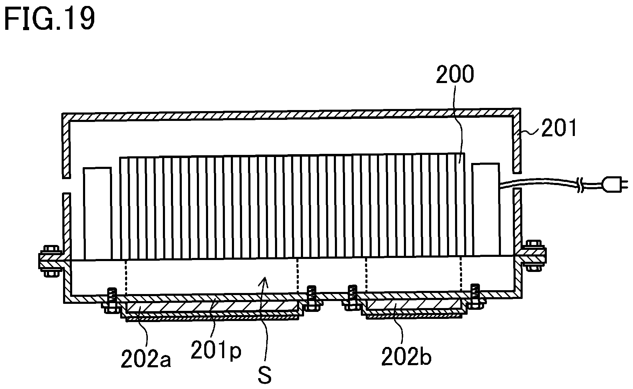

In the technique described in PATENT DOCUMENT 2, the space S is located between the first and second heaters 202a and 202b and the secondary batteries 200 as illustrated in FIG. 19. For this reason, the secondary batteries 200 cannot be efficiently heated.

It is therefore an object of the present disclosure to uniformly and efficiently warm a plurality of cells for use in a battery module.

### SOLUTION TO THE PROBLEM

In order to achieve the object, a battery module according to the present invention is disclosed in claim 1.

### ADVANTAGES OF THE INVENTION

The battery module according to the present disclosure enables uniform and efficient warming of a plurality of cells for use in the battery module.

### BRIEF DESCRIPTION OF THE DRAWINGS

[FIG. 1] FIG. 1 is a cross-sectional view illustrating the structure of a cell for use in a battery module according to a first embodiment of the present disclosure.
[FIG. 2] FIG. 2 is a perspective view illustrating the structure of a battery block included in the battery module according to the first embodiment of the present disclosure.
[FIG. 3] FIG. 3 is a cross-sectional view illustrating the structure of the battery block included in the battery module according to the first embodiment of the present disclosure, and is a cross-sectional view taken along the line III-III illustrated in FIG. 2.
[FIG. 4] FIGS. 4A and 4B illustrate the structure of the battery module according to the first embodiment of the present disclosure, FIG. 4A is a front view of the battery module, and FIG. 4B is an exploded front view thereof.
[FIG. 5] FIGS. 5A and 5B illustrate the structure of a battery module according to another example of the first embodiment of the present disclosure, FIG. 5A is a front view of the battery module, and FIG. 5B is an exploded front view thereof.
[FIG. 6] FIGS. 6A and 6B illustrate the structure of a battery module according to a variation of the first embodiment of the present disclosure, FIG. 6A is a front view of the battery module, and FIG. 6B is an exploded front view thereof.
[FIG. 7] FIG. 7 is a front view illustrating the structure of a battery module according to another variation of the first embodiment of the present disclosure.
[FIG. 8] FIG. 8 is a front view illustrating the structure of a battery module according to still another variation of the first embodiment of the present disclosure.
[FIG. 9] FIG. 9 is a perspective view illustrating the structure of a battery block included in a battery module according to a second embodiment of the present disclosure.
[FIG. 10] FIGS. 10A and 10B illustrate the structure of the battery module according to the second embodiment of the present disclosure, FIG. 10A is a front view of the battery module, and FIG. 10B is an exploded front view thereof.
[FIG. 11] FIG. 11 is a front view illustrating the structure of a battery module according to a third embodiment of the present disclosure.
[FIG. 12] FIG. 12 is a perspective view illustrating the structure of a battery block.
[FIG. 13] FIG. 13 is a perspective view illustrating the structure of a battery module according to a fourth embodiment of the present disclosure.
[FIG. 14] FIG. 14 is a perspective view illustrating the structure of a battery module according to another example of the fourth embodiment of the present disclosure.
[FIG. 15] FIG. 15 is a perspective view illustrating the structure of a holder.
[FIG. 16] FIG. 16 is a perspective view illustrating the structure of a battery module of a first example.
[FIG. 17] FIG. 17 illustrates variations in each of minimum and maximum temperatures during a warming period.
[FIG. 18] FIGS. 18A and 18B illustrate the structure of a plate included in a battery module described in PATENT DOCUMENT 1, FIG. 18A is a plan view of the plate, and FIG. 18B is a cross-sectional view taken along the line XVIIIb-XVIIIb illustrated in FIG. 18A.
[FIG. 19] FIG. 19 is a cross-sectional view illustrating the structure of a heater-equipped battery assembly structure described in PATENT DOCUMENT 2.

### DESCRIPTION OF EMBODIMENTS

How the applicants of this application have completed the present disclosure will be described hereinafter.

A plurality of cells included in a battery assembly are often housed in a box-like case as illustrated in FIG. 19 concerning PATENT DOCUMENT 2. Battery assemblies each including a case in which a plurality of cells are housed are often connected together to form a battery module. For this reason, a heater is often placed on the case to heat the cells.

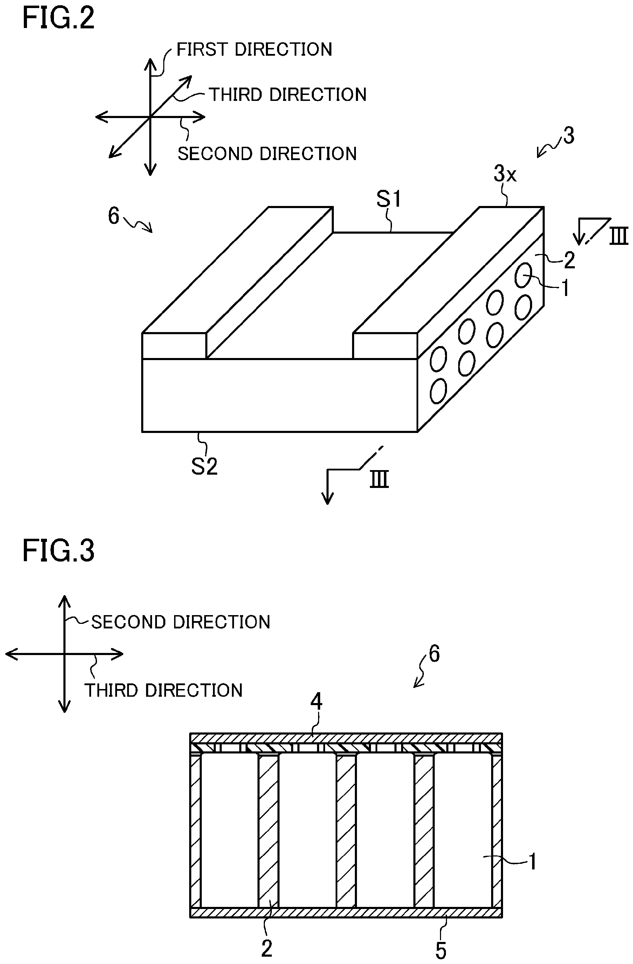

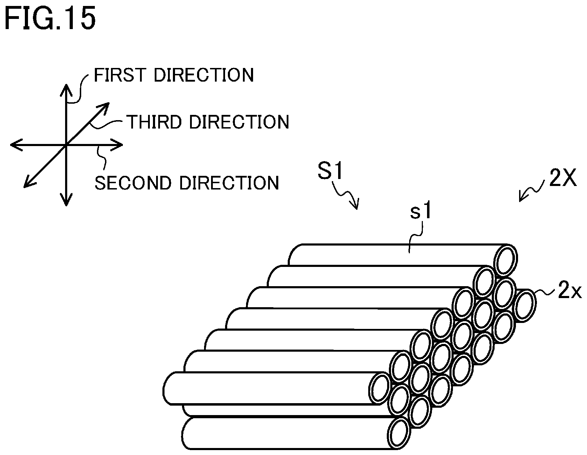

The applicants of this application have found that battery blocks each including a plurality of cells and a holder (see FIG. 2 and the reference character 2 in FIG. 3, in particular, see the reference character 2X in FIG. 15) are connected together without being housed in a box-like case to form a battery module. As such, the applicants of this application have found a new battery module structure. The holder is made of, for example, aluminum (Al). This reduces the weight of the holder.

Attention is directed toward the fact that the holder is made of Al (i.e., a thermally conductive material), and in the present disclosure, a heater is placed on the holder. This enables efficient and uniform warming of the cells housed in the holder. As such, the applicants of this application have focused on the battery module structure found by the applicants of this application, and has achieved the present disclosure.

Embodiments of the present disclosure will be described hereinafter with reference to the drawings. The following embodiments are merely examples of the present disclosure, and the present disclosure is not limited to the following embodiments. Various changes and modifications may be made without departing from the scope of the invention, and variations and modified examples are also within the scope of the invention. In the drawings, components are illustrated in dimensional proportions suitable for representation, and the illustrated dimensional proportions may be different from the actual dimensional proportions.

### (First Embodiment)

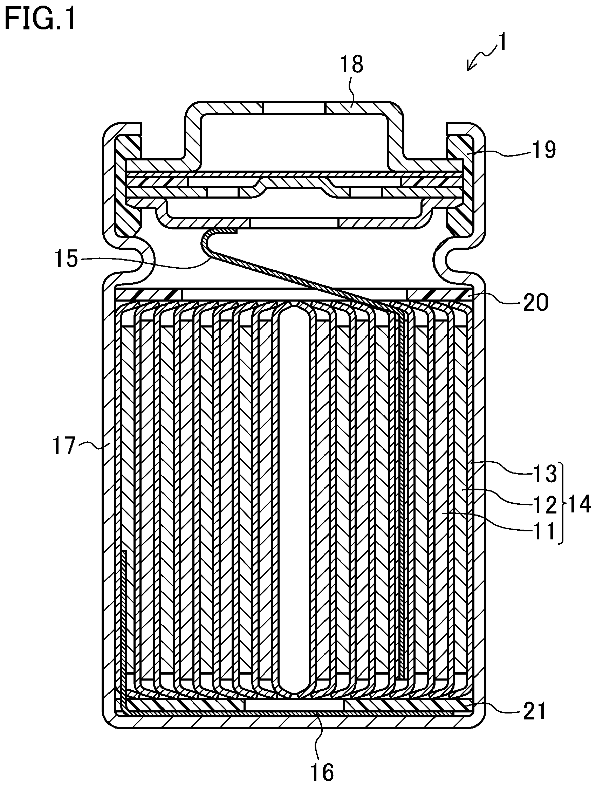

A battery module according to a first embodiment of the present disclosure will be described hereinafter with reference to FIGS. 1, 2, 3, 4A, and 4B.

### -Cell-

FIG. 1 is a cross-sectional view illustrating the structure of a cell 1 for use in the battery module according to this embodiment.

The cell 1 is, for example, a nonaqueous electrolyte secondary battery. As illustrated in FIG. 1, the cell 1 includes a battery case 17, and an electrode group 14 housed in the battery case 17. A sealing body 18 is crimped onto an open upper end of the battery case 17 with a gasket 19 interposed therebetween.

The electrode group 14 includes a positive electrode 11, a negative electrode 12, and a separator 13. The positive electrode 11 and the negative electrode 12 are wound with the separator 13 interposed therebetween to form the electrode group 14. An upper insulating plate 20 is placed at the upper end of the electrode group 14, and a lower insulating plate 21 is placed at the lower end of the electrode group 14.

One end of a positive electrode lead 15 is placed on the positive electrode 11, and the other end of the positive electrode lead 15 is connected to the sealing body 18 serving as a positive electrode terminal. One end of a negative electrode lead 16 is placed on the negative electrode 12, and the other end of the negative electrode lead 16 is connected to the battery case 17 serving as a negative electrode terminal.

While, in this embodiment, a case where a nonaqueous electrolyte secondary battery is used as the cell 1 is specifically described, the present disclosure is not limited to this case.

While, in this embodiment, a case where the cell 1 is cylindrical as illustrated in FIG. 2 below is specifically described, the present disclosure is not limited to this case. The cell 1 may be, for example, a rectangular battery.

### -Battery Block-

FIG. 2 is a perspective view illustrating the structure of a battery block included in the battery module according to this embodiment. FIG. 3 is a cross-sectional view illustrating the structure of the battery block, and is a cross-sectional view taken along the line III-III illustrated in FIG. 2. In FIG. 2, a positive electrode current collector plate, a negative electrode current collector plate, and other components are not shown for ease of understanding.

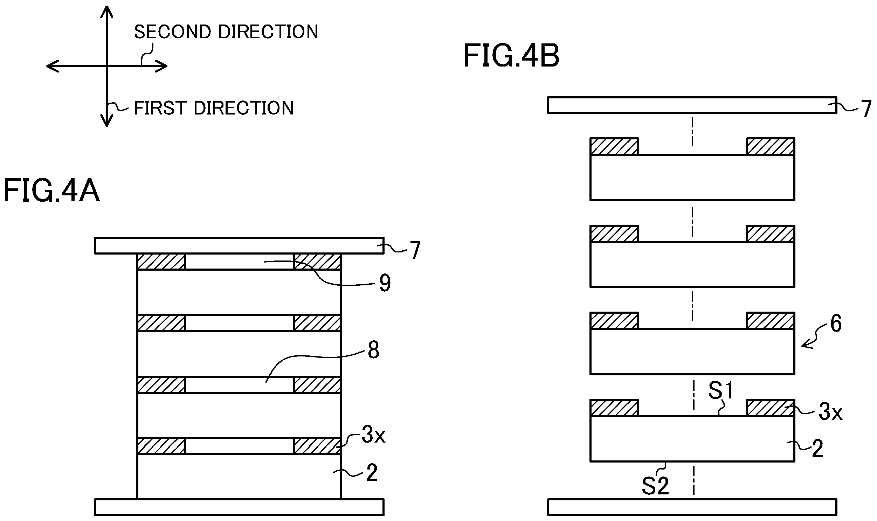

A plurality of battery blocks included in the battery module according to this embodiment are stacked in one of first directions (a longitudinal direction of the paper of FIG. 2) as illustrated in FIG. 4 below.

As illustrated in FIGS. 2 and 3, battery blocks 6 each include at least a plurality of (e.g., eight) cells 1, and a holder 2 having accommodation portions in each of which one of the cells 1 is housed. While, in this embodiment, a case where the number of the cells 1 housed in the holder 2 is eight is specifically described for ease of understanding, the present disclosure is not limited to this case.

The holder 2 has a plurality of through holes passing through the holder 2. In other words, the holder 2 has the accommodation portions (i.e., portions each surrounding one of the through holes). The cells 1 are each housed in one of the accommodation portions. The accommodation portions extend in second directions (lateral directions of the paper of FIG. 2 and longitudinal directions of the paper of FIG. 3) orthogonal to the first directions.

The holder 2 has a first surface S1 and a second surface S2 opposite to each other in a corresponding one of the first directions. A heater 3 is placed on the first surface S1. The heater 3 includes a pair of heater portions 3x. The pair of heater portions 3x are placed on both end portions of the first surface S1 in the second directions. The heater portions 3x each extend in third directions (the front-to-rear and rear-to-front directions of the paper of FIG. 2) orthogonal to the first and second directions. The heater portions 3x preferably extend from one end of the first surface S1 in the third directions to the other end thereof.

As illustrated in FIG. 3, a positive electrode current collector plate 4 is placed on one end portions of the cells 1 (near the positive electrode terminals). The positive electrode terminals of the cells 1 are electrically connected in parallel through the positive electrode current collector plate 4.

In contrast, a negative electrode current collector plate 5 is placed on the other end portions of the cells 1 (near the negative electrode terminals). The negative electrode terminals of the cells 1 are electrically connected in parallel through the negative electrode current collector plate 5.

The inner side surface of each accommodation portion is shaped to be capable of being in contact with the outer side surface of one of the cells 1. When the cells 1 are, for example, cylindrical batteries, the inner side surface of the accommodation portion is circumferential, and the outer circumferential surface of each cell 1 is in contact with the inner circumferential surface of one of the accommodation portions.

The holder 2 is made of a thermally conductive material. First, examples of a material of the holder 2 include aluminum (Al) or copper (Cu). Second, other examples of the material of the holder 2 include a resin to which aluminum oxide, titanium oxide, or aluminum nitride is added.

### -Battery Module-

FIGS. 4A and 4B illustrate the structure of the battery module according to this embodiment, FIG. 4A is a front view of the battery module, and FIG. 4B is an exploded front view thereof.

As illustrated in FIGS. 4A and 4B, the battery module according to this embodiment includes a plurality of (e.g., four) battery blocks 6 stacked in one of the first directions (a lateral direction of the paper, i.e., a vertical direction), and a pair of plates 7 between which the battery blocks 6 are sandwiched to fix the battery blocks 6. While, in this embodiment, a case where the number of the battery blocks 6 included in the battery module is four is specifically described for ease of understanding, the present disclosure is not limited to this case.

The battery blocks 6 are stacked such that the first surface S1 of one of each adjacent pair of the holders 2 faces the second surface S2 of the other one thereof.

A space 8 through which a cooling medium (e.g., air) flows is defined between each adjacent pair of the holders 2 by the pair of heater portions 3x interposed therebetween.

A space 9 through which a cooling medium flows is defined between the uppermost one of the holders 2 and an upper one of the plates 7 by the pair of heater portions 3x interposed therebetween.

According to this embodiment, the holders 2 are made of a thermally conductive material, and the heater 3 is placed on the first surface S1 of each holder 2. This allows heat to be efficiently transferred from the heater 3 to the holder 2, and the transferred heat can be efficiently transferred to the cells 1 each having an outer circumferential surface that is in contact with the inner circumferential surface of one of the accommodation portions. This enables efficient and uniform warming of the cells 1 housed in the holder 2. Thus, even if the battery module is used in a low-temperature environment (e.g., -20°C), the cells 1 can be operated normally. Since, as such, the holder 2 is made of a thermally conductive material, the cells 1 can be efficiently and uniformly warmed even in a situation where the heater 3 is placed on portions of the first surface S1 of the holder 2.

Furthermore, the space 8 can be defined between each adjacent pair of the holders 2 by the pair of heater portions 3x. Thus, the cooling medium flowing through the space 8 can cool the each adjacent pair of the holders 2 to cool the cells 1 housed in the each adjacent pair of the holders 2. If, as such, the heater 3 capable of warming the cells 1 includes the pair of heater portions 3x, the cooling medium flowing through the space 8 formed between the pair of heater portions 3x can cool the cells 1, and the heater 3 does not impair the capability to cool the cells 1. Thus, if the battery module is used in a high-temperature environment, such as in the summer months, or at high load, and the cells 1 need to be cooled, the cells 1 can be cooled.

Furthermore, the space 8 (or the space 9) can be formed between one of the pair of heater portions 3x and the other one thereof. This enables the formation of the space 8 (or the space 9) adjacent to the one of the pair of heater portions 3x and the other one thereof. This allows the cooling medium flowing through the space 8 (or the space 9) to cool the used heater 3.

Furthermore, the pair of heater portions 3x are placed toward the outside of the battery module, and the space 8 is formed inside the battery module. Thus, while the cells 1 included in the battery module are efficiently warmed, the cells 1 can be efficiently cooled. The reason for this is as follows. Typically, since an outer portion of the battery module is exposed to outside air, the heat of the outer portion of the battery module tends to be released to outside the battery module, and the outer portion of the battery module, therefore, tends to be cooled. In contrast, since it is difficult to release the heat of an inner portion of the battery module to outside the battery module, heat tends to be confined within the battery module. To address this problem, in this embodiment, the pair of heater portions 3x are placed toward the outside of the battery module (i.e., toward a portion of the battery module that tends to be cooled), and the space 8 is formed inside the battery module (i.e., toward a portion thereof within which heat tends to be confined).

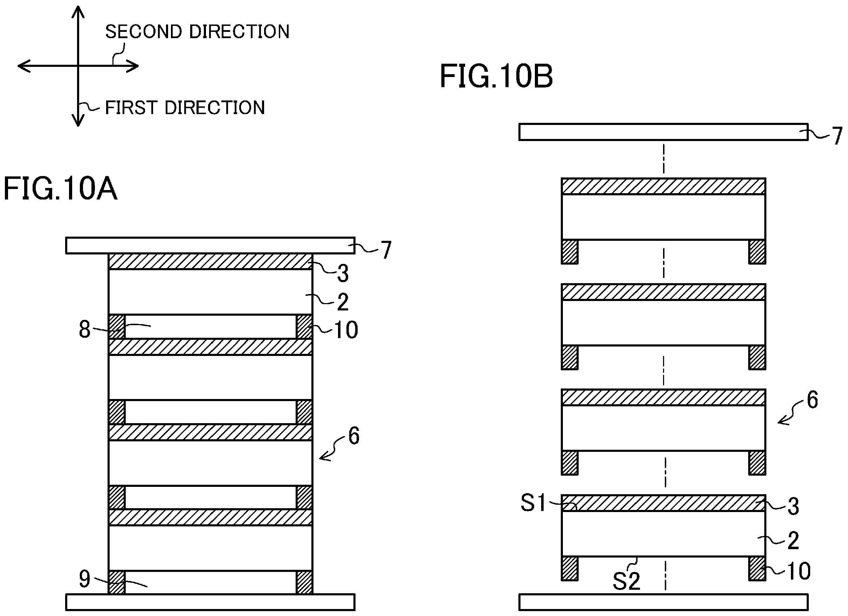

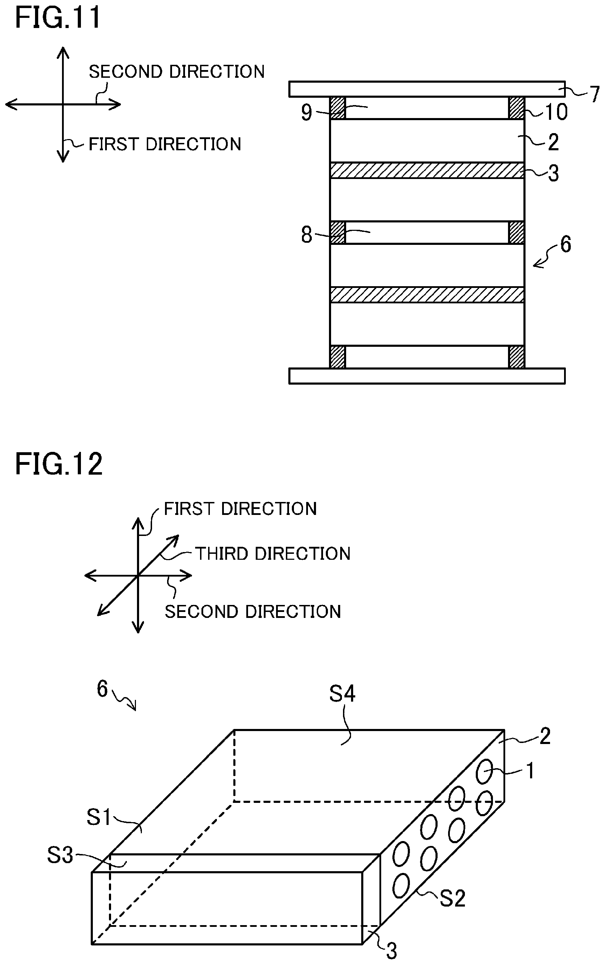

Furthermore, unlike second and third embodiments described below, the space 8 can be defined by the pair of heater portions 3x instead of by a pair of spacers (see FIGS. 10A and 10B, and the reference character 10 in FIG. 11). As such, the heater 3 including the pair of heater portions 3x can serve as a pair of spacers.

While, in this embodiment, a case where as illustrated in FIG. 4A, the second surface S2 of the lowermost one of the holders 2 is in contact with a lower one of the plates 7 is specifically described, the present disclosure is not limited to this case.

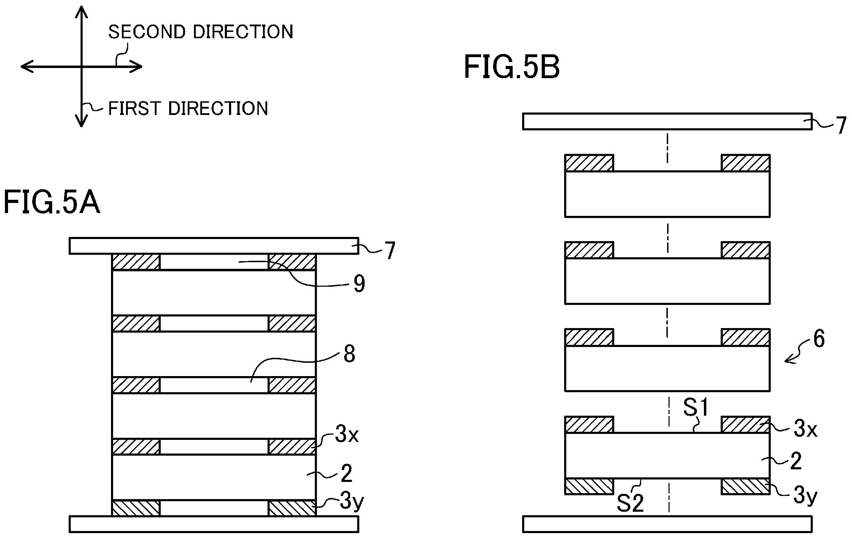

For example, as illustrated in FIGS. 5A and 5B, a pair of heater portions 3y may be placed on both end portions of the second surface S2 of the lowermost one of the holders 2 in the second directions. As illustrated in FIG. 5B, the lowermost one of the battery blocks 6 may include the heater 3 including not only the pair of heater portions 3x but also the pair of heater portions 3y. As such, the heater 3 may be placed on both of the first surface S1 and the second surface S2.

The heater portions 3y extend in the third directions. The heater portions 3y preferably extend from one end of the second surface S2 in the third directions to the other end thereof.

Thus, the pair of heater portions 3y can be placed between the lowermost one of the holders 2 and a corresponding one of the plates 7 exposed to outside air. This enables efficient warming of the holder 2. Furthermore, a space 9 through which a cooling medium flows can be defined between the lowermost one of the holders 2 and the corresponding one of the plates 7 by the pair of heater portions 3y.

### (Variation of First Embodiment)

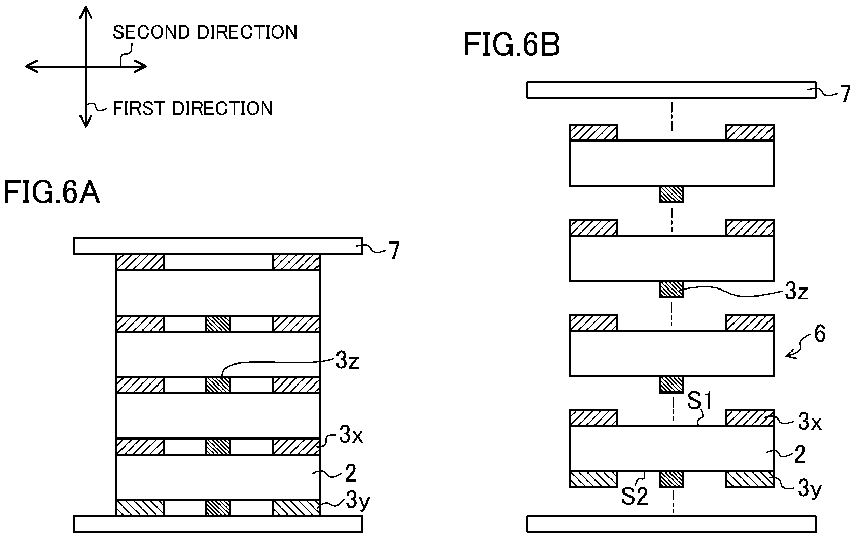

A battery module according to a variation of the first embodiment of the present disclosure will be described hereinafter with reference to FIGS. 6A and 6B. FIGS. 6A and 6B illustrate the structure of the battery module according to this variation, FIG. 6A is a front view of the battery module, and FIG. 6B is an exploded front view thereof. In FIGS. 6A and 6B, the same characters as those in the first embodiment are used to represent components similar to those of the first embodiment. Thus, in this variation, description similar to that of the first embodiment is appropriately omitted.

The difference between this variation and the first embodiment is as follows. The battery module according to this variation includes not only components similar to those of the first embodiment, but also auxiliary heater portions 3z and a pair of heater portions 3y.

Specifically, as illustrated in FIG. 6A and 6B, one of the auxiliary heater portions 3z is placed on a central portion of a second surface S2 of each of holders 2. The pair of heater portions 3y are placed on both end portion of the second surface S2 of the lowermost one of the holders 2 in the second directions.

As illustrated in FIG. 6B, battery blocks 6 except the lowermost one thereof each include a heater 3 including a pair of heater portions 3x and one of the auxiliary heater portions 3z. The lowermost one of the battery blocks 6 includes a heater 3 including a pair of heater portions 3x, one of the auxiliary heater portions 3z, and the pair of heater portions 3y.

The auxiliary heater portions 3z each extend, for example, from one end of the second surface S2 of one of the holders 2 in the third directions to the other end thereof.

Here, about 50% of the pair of heater portions 3x interposed between each adjacent pair of the holders 2 (i.e., between one of each adjacent pair of the holders 2 and the other one thereof) contributes to warming of the one of each adjacent pair of the holders 2, whereas the remaining about 50% thereof contributes to warming of the other one of each adjacent pair of the holders 2. This may make it difficult to efficiently warm the adjacent pair of the holders 2. To address this problem, one of the auxiliary heater portions 3z is placed on the second surface S2 of each holder 2. This enables efficient warming of each adjacent pair of the holders 2.

While, in this variation, a case where one of the auxiliary heater portions 3z and the pair of heater portions 3y are placed on the second surface S2 of the lowermost one of the holders 2 is specifically described, the present disclosure is not limited to this case.

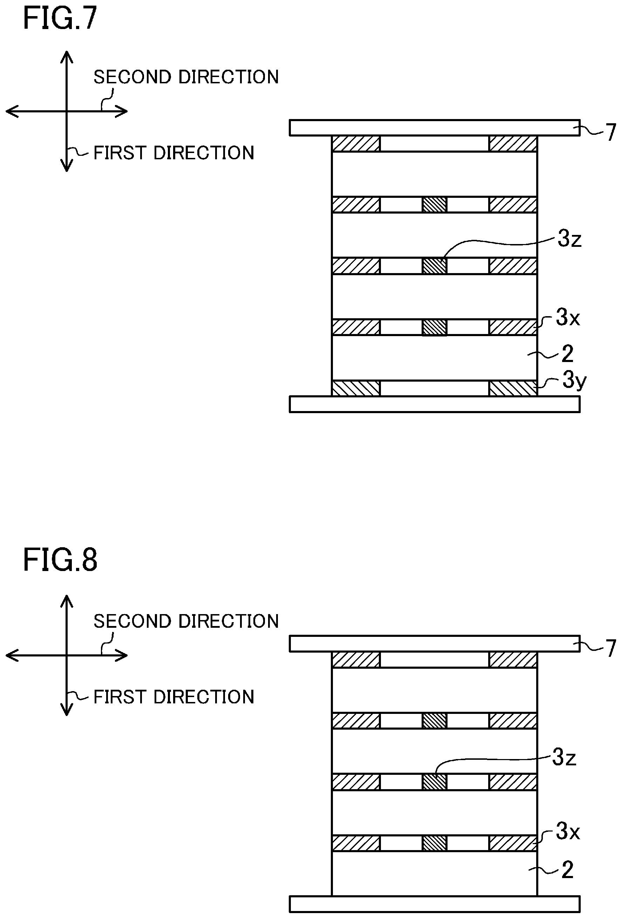

First, for example, as illustrated in FIG. 7, only the pair of heater portions 3y may be placed on the second surface S2 of one of the holders 2 without placing one of the auxiliary heater portions 3z thereon. As described above, the principal object of provision of the auxiliary heater portions 3z is to efficiently warm each adjacent pair of the holders 2. For this reason, one of the auxiliary heater portions 3z does not always need to be placed on the lowermost one of the holders 2 (i.e., between one of plates 7 and one of the holders 2 adjacent to the one of the plates 7).

Second, for example, as illustrated in FIG. 8, one of the auxiliary heater portions 3z and the pair of heater portions 3y do not need to be placed on the second surface S2 of one of the holders 2.

Third, for example, a pair of spacers (see FIGS. 10A and 10B, and the reference character 10 in FIG. 11) may be placed instead of the pair of heater portions 3y.

Whether or not one of the auxiliary heater portions 3z and the pair of heater portions 3y need to be placed on the second surface S2 of the lowermost one of the holders 2 may be appropriately determined depending on the design of the battery module.

While, in the first embodiment and its variation, a case where as illustrated in FIG. 2, the heater portions 3x extend from one end of the first surface S1 in the third directions to the other end thereof, i.e., a case where the length of each heater portion 3x in the third directions is equal to that of each holder 2 in the third directions, is specifically described, the present disclosure is not limited to this case. For example, the length of each heater portion in the third directions may be less than that of each holder in the third directions. The length of each heater portion in the third directions merely needs to be great enough to allow each holder to be stably placed on a corresponding pair of the heater portions, and the length of each heater portion in the third directions does not always need to be equal to that of each holder in the third directions.

While, in the first embodiment and its variation, a case where an outer end surface of each heater portion 3x in a corresponding one of the second directions is flush with an end surface of a corresponding one of the holders 2 in the corresponding one of the second directions as illustrated in FIG. 2 is specifically described, the present disclosure is not limited to this case. For example, the outer end surface of each heater portion in the corresponding one of the second directions may be located inwardly of a side surface of the corresponding one of the holders in the corresponding one of the second directions. The heater portions merely need to be placed on end portions of the first surface of a corresponding one of the holders in the second directions, and the outer end surface of each heater portion in a corresponding one of the second directions does not always need to be flush with the end surface of a corresponding one of the holders in the corresponding one of the second directions. Note that when the outer end surface of each heater portion 3x in the corresponding one of the second directions is flush with the side surface of the corresponding one of the holders in the corresponding one of the second directions in a manner similar to that in the first embodiment, the spaces 8 and 9 each having a maximum volume can be formed.

### (Second Embodiment, not according to the present Invention)

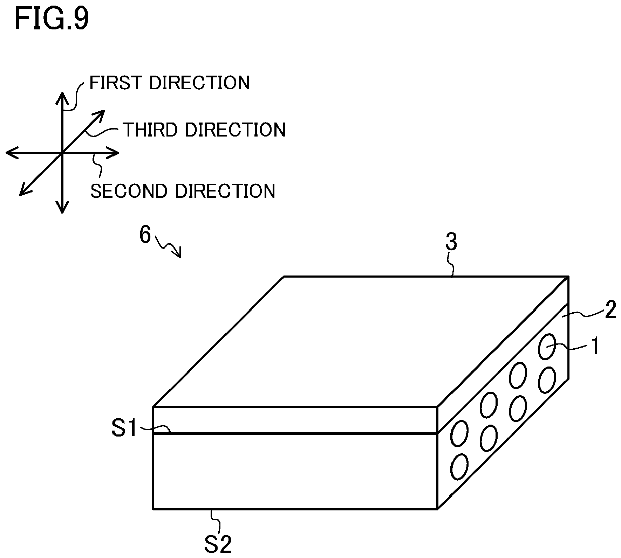

A battery module according to a second embodiment of the present disclosure will be described hereinafter with reference to FIGS. 9, 10A, and 10B. FIG. 9 is a perspective view illustrating the structure of a battery block included in the battery module according to this embodiment. FIGS. 10A and 10B illustrate the structure of the battery module according to this embodiment, FIG. 10A is a front view of the battery module, and FIG. 10B is an exploded front view thereof. In FIGS. 9, 10A, and 10B, the same characters as those in the first embodiment are used to represent components similar to those of the first embodiment. Thus, in this embodiment, description similar to that of the first embodiment is appropriately omitted.

As illustrated in FIG. 9, a battery block 6 includes at least a plurality of cells 1 and a holder 2. A heater 3 is placed on an entire first surface S1 of the holder 2.

As illustrated in FIGS. 10A and 10B, the battery module according to this embodiment includes a plurality of battery blocks 6, pairs of spacers 10, and a pair of plates 7. The battery blocks 6 are stacked in one of first directions (a lateral direction of the paper, i.e., a vertical direction). Each pair of spacers 10 are placed on both end portions of a second surface S2 of a corresponding one of holders 2 in second directions (the longitudinal directions of the paper). The battery blocks 6 are sandwiched between the pair of plates 7 so as to be fixed. The spacers 10 extend in third directions (the front-to-rear and rear-to-front directions of the paper).

The battery blocks 6 are stacked such that the first surface S1 of one of each adjacent pair of the holders 2 faces the second surface S2 of the other one thereof.

A space 8 through which a cooling medium flows is defined between each adjacent pair of the battery blocks 6 (specifically, between the holder 2 of one of the adjacent pair of the battery blocks 6 and the heater 3 placed on the other one thereof) by the pair of spacers 10 interposed therebetween.

A space 9 through which a cooling medium flows is defined between the lowermost one of the holders 2 and a lower one of the plates 7 by the pair of spacers 10 interposed therebetween.

According to this embodiment, the holders 2 are made of a thermally conductive material, and the heater 3 is placed on the first surface S1 of each holder 2. This allows heat to be efficiently transferred from the heater 3 to the holder 2, and the transferred heat can be efficiently transferred to the cells 1 each having an outer circumferential surface that is in contact with the inner circumferential surface of one of accommodation portions. This enables efficient and uniform warming of the cells 1 housed in the holder 2.

Furthermore, the space 8 can be defined between each adjacent pair of the battery blocks 6 (specifically, between the holder 2 of one of the adjacent pair of the battery blocks 6 and the heater 3 placed on the other one thereof) by the corresponding pair of spacers 10. Thus, the cooling medium flowing through the space 8 can cool the each adjacent pair of the holders 2 to cool the cells 1 housed in the each adjacent pair of the holders 2. Furthermore, the cooling medium flowing through the space 8 can cool the used heater 3.

### (Third Embodiment, not according to the present Invention)

A battery module according to a third embodiment of the present disclosure will be described hereinafter with reference to FIG. 11. FIG. 11 is a front view illustrating the structure of a battery module according to this embodiment. In FIG. 11, the same characters as those in the second embodiment are used to represent components similar to those of the second embodiment. Thus, in this embodiment, description similar to that of the second embodiment is appropriately omitted.

The differences between this embodiment and the second embodiment are as follows.

In this embodiment, as illustrated in FIG. 11, a plurality of battery blocks 6 are stacked such that first surfaces S1 of each of some of adjacent pairs of holders 2 face each other and second surfaces S2 of the other adjacent pair or each of the other adjacent pairs of the holders 2 face each other.

In contrast, in the second embodiment, as illustrated in FIG. 10A, the battery blocks 6 are stacked such that the first surface S1 of one of each adjacent pair of the holders 2 faces the second surface S2 of the other one thereof.

In this embodiment, the heater 3 interposed between the first surfaces S1 of an adjacent pair of the holders 2 is shared by the adjacent pair of the holders 2. For this reason, the number of the holders 2 included in the battery module according to this embodiment (e.g., four) is different from the number of the heaters 3 included in the battery module (e.g., two).

In contrast, in the second embodiment, the holders 2 each include the heater 3. Thus, the number of the holders 2 included in the battery module according to the second embodiment (e.g., four) is equal to the number of the heaters 3 included in the battery module (e.g., four). Thus, the height of the battery module according to the second embodiment in the first directions is greater than that of the battery module according to this embodiment in the first directions.

In this embodiment, a space 8 through which a cooling medium flows is defined between the second surfaces S2 of an adjacent pair of the holders 2. A space 9 through which a cooling medium flows is defined between the uppermost one of the holders 2 and an upper one of plates 7. Another space 9 through which a cooling medium flows is defined between the lowermost one of the holders 2 and a lower one of the plates 7.

In contrast, in the second embodiment, the space 8 through which a cooling medium flows is defined between each adjacent pair of the battery blocks 6 (specifically, between the holder 2 of one of the adjacent pair of the battery blocks 6 and the heater 3 placed on the other one thereof). The space 9 through which a cooling medium flows is defined between the lowermost one of the holders 2 and the lower one of the plates 7.

According to this embodiment, the holders 2 are made of a thermally conductive material, and the heater 3 is placed on the first surfaces S1 of an adjacent pair of the holders 2. This allows heat to be efficiently transferred from the heater 3 to the holders 2, and the transferred heat can be efficiently transferred to the cells 1 each having an outer circumferential surface that is in contact with the inner circumferential surface of one of accommodation portions. This enables efficient and uniform warming of the cells 1 housed in the holders 2.

Furthermore, the space 8 can be defined between the second surfaces S2 of an adjacent pair of the holders 2 by a corresponding one of the pairs of spacers 10. Thus, the cooling medium flowing through the space 8 can cool the adjacent pair of the holders 2 to cool the cells 1 housed in the adjacent pair of the holders 2.

Furthermore, the heater 3 interposed between the first surfaces S1 of an adjacent pair of the holders 2 can be shared by the adjacent pair of the holders 2. This can reduce the number of the heaters 3, thereby densely stacking the battery blocks 6.

While, in the second and third embodiments, a case where as illustrated in FIGS. 10A, 10B, and 11, a heater 3 is placed on an entire first surface S1 of a holder 2 is specifically described, the present disclosure is not limited to this case. Note that when the heater 3 is placed on the entire first surface S1 of the holder 2 in a manner similar to that in each of the second and third embodiments, the entire first surface S1 of the holder 2 can be in contact with the heater 3. This enables efficient warming of the cells 1 housed in the holder 2. Since, in particular, in the third embodiment, the heater 3 is shared by an adjacent pair of the holders 2, the heater 3 is preferably placed on entire first surfaces S1 of the adjacent pair of the holders 2.

While, in the first embodiment, its variation, and the second and third embodiments, a case where the heater 3 is placed on at least one of the first surface S1 or the second surface S2 facing one of the first directions is specifically described, the present disclosure is not limited to this case.

For example, as illustrated in FIG. 12, a heater 3 may be placed on at least one of a third surface S3 or a fourth surface S4 of a holder 2 facing one of the third directions. The heater 3 merely needs to be placed on at least one of the first surface S1, the second surface S2, the third surface S3, or the fourth surface S4. This enables efficient and uniform warming of the cells 1 housed in the holder 2.

### (Fourth Embodiment, not according to the present Invention)

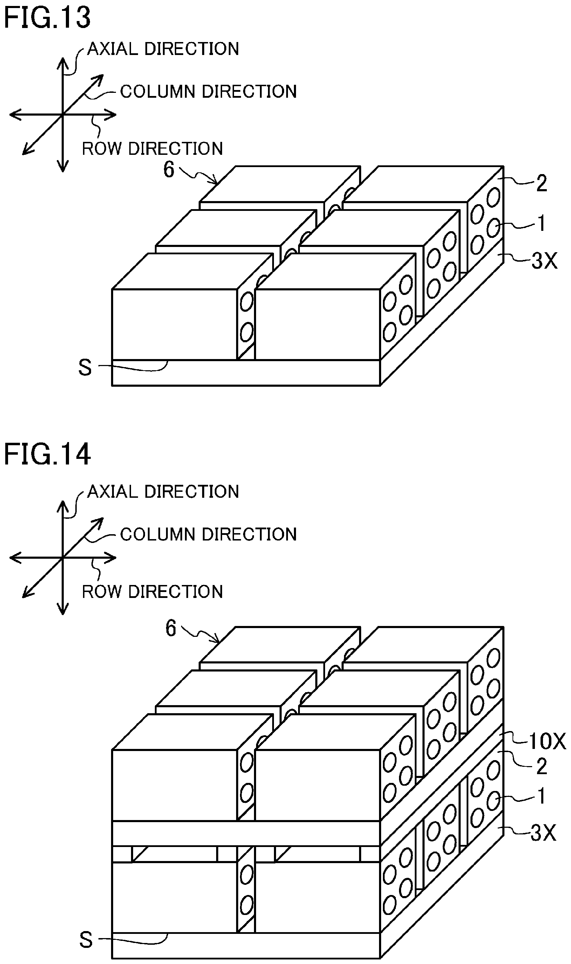

A battery module according to a fourth embodiment of the present disclosure will be described hereinafter with reference to FIG. 13. FIG. 13 is a perspective view illustrating the structure of the battery module according to this embodiment. In FIG. 13, the same characters as those in the first embodiment are used to represent components similar to those of the first embodiment. Thus, in this embodiment, description similar to that of the first embodiment is appropriately omitted.

The battery module according to this embodiment includes a plurality of (e.g., six) battery blocks 6 arranged in a matrix. While, in this embodiment, a case where the number of the battery blocks 6 included in the battery module is six is specifically described for ease of understanding, the present disclosure is not limited to this case.

The battery blocks 6 each include at least a plurality of (e.g., four) cells 1 and a holder 2 having accommodation portions extending in a row direction. While, in this embodiment, a case where the number of the cells 1 housed in each holder 2 is four is specifically described for ease of understanding, the present disclosure is not limited to this case.

A heater 3X is placed on surfaces S of the holders 2 in one of axial directions orthogonal to the row direction and a column direction. In other words, the holders 2 are arranged on a surface of the heater 3X in the other one of the axial directions. The entire surfaces S of the holders 2 in the one of the axial directions are in contact with the heater 3X.

According to this embodiment, the holders 2 are made of a thermally conductive material, and the heater 3X is placed on the surfaces S of the holders 2 in the one of the axis directions. This allows heat to be efficiently transferred from the heater 3X to the holders 2, and the transferred heat can be efficiently transferred to the cells 1 each having an outer circumferential surface that is in contact with the inner circumferential surface of one of accommodation portions. This enables efficient and uniform warming of the cells 1 housed in the holders 2.

While, in the fourth embodiment, a case where groups each including a plurality of (e.g., six) battery blocks arranged in a matrix are not axially stacked is specifically described, the present disclosure is not limited to this case.

For example, as illustrated in FIG. 14, groups each including a plurality of (e.g., six) battery blocks may be axially stacked. In this case, a pair of spacers 10X are preferably placed on both end portions, in row directions, of one axial surfaces of a plurality of (e.g., three) holders 2 arranged in a column direction (i.e., surfaces thereof opposite to surfaces S thereof being in contact with a heater 3X).

While, in the fourth embodiment, a case where as illustrated in FIG. 13, a plurality of (e.g., six) battery blocks 6 are arranged on an axial surface of the heater 3X in a matrix is specifically described, the present disclosure is not limited to this case.

For example, a plurality of battery blocks arranged in a matrix may be housed in a generally box-like case, and a heater may be placed on an axial surface of a case. In this situation, the cases include a first case in which the battery blocks are housed, and a second case in which the first case is housed and on the axial surface of which the heater is placed. The first case is made of an insulative resin. The second case is made of a thermally conductive metal.

Also in this case, advantages similar to those of the fourth embodiment can be obtained. Specifically, the holder is made of a thermally conductive material. This allows heat transferred from the heater through the second case to the first case to be efficiently transferred to the holders, and the transferred heat can be efficiently transferred to the cells each having an outer circumferential surface that is in contact with the inner circumferential surface of one of accommodation portions. This enables efficient and uniform warming of the cells housed in the holders.

However, since, in this case, the second and first cases are interposed between the heater and the holders, heat is transferred from the heater through the second and first cases to the holders. While, for this reason, the speed at which the cell temperature increases is slightly lower than when the holder 2 is placed on such a heater 3X as illustrated in FIG. 13, the speed at which the cell temperature increases is adequately high, because the second case is made of a thermally conductive metal, and the holder is made of a thermally conductive material.

The thickness of the first case merely needs to be large enough to electrically insulate the battery blocks housed in the first case from the outside of the first case, and is preferably relatively small enough to allow heat transferred from the heater to the second case to be efficiently transferred through the first case to the holders.

While, in the first embodiment, its variation, the second, third, and fourth embodiments, a case where the holder 2 having a plurality of through holes is used as the holder is specifically described, the present disclosure is not limited to this case.

For example, as illustrated in FIG. 15, a holder 2X including a plurality of hollow tubular pipes 2x (accommodation portions) may be used. Each adjacent pair of the pipes 2x are coupled together. A first surface S1 of the holder 2X has a plurality of convex portions s1. In this case, although not shown, a surface of a heater 3 or 3X being in contact with the first surface S1 has concave portions into each of which a corresponding one of the convex portions s1 of the first surface S1 is fitted.

To examine the effectiveness of the present disclosure, a comparison is made between a first example and a first comparative example.

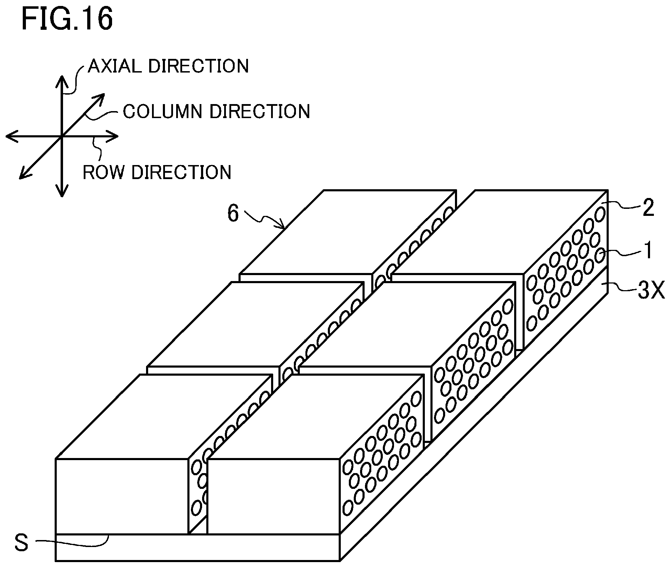

A battery module of the first example has a structure similar to that of the battery module according to the fourth embodiment (see FIG. 13). Specifically, as illustrated in FIG. 16, the battery module of the first example includes a plurality of battery blocks 6. A heater 3X is placed on axial surfaces S of a plurality of holders 2. The holders 2 are made of Al. The number of the battery blocks 6 included in the battery module of the first example is six. The number of cells 1 housed in each holder 2 is 20 (= 7 + 6 + 7).

The structural difference between the first comparative example and the first example is as follows. In the first comparative example, unlike the first example, holders made of polybutylene terephthalate (PBT) having a thermal conductivity of 0.2 W/m·K are used instead of the holders made of Al.

At an environmental temperature of -20°C, a plurality of cells included in a battery module in each of the first example and the first comparative example were warmed with a heater having a heating power of 250 W and a temperature of 70°C, and the temperatures of the cells were measured.

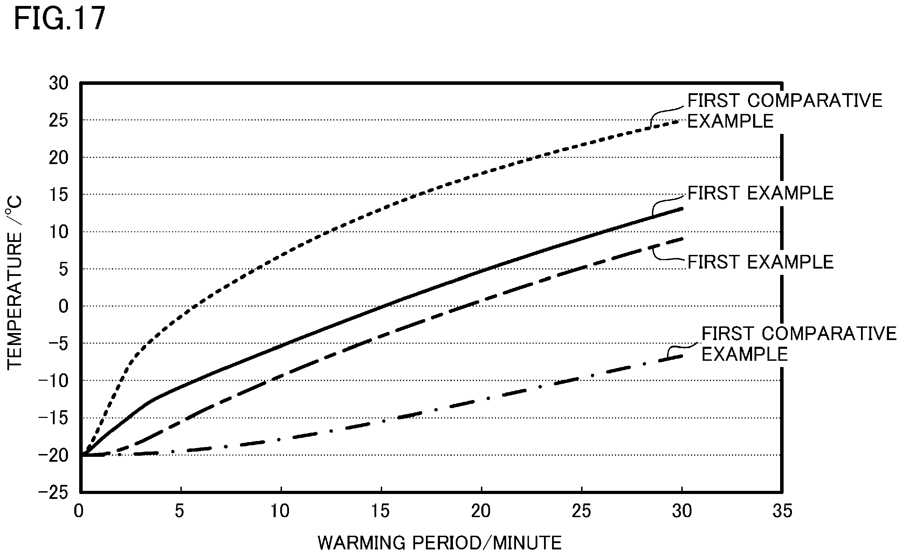

The temperatures of the cells warmed during a warming period X were measured, and minimum temperatures Ymin and maximum temperatures Ymax were plotted relative to the warming period X. FIG. 17 is a graph illustrating variations in minimum temperature and maximum temperature during the warming period.

FIG. 17 shows that in the first example, the difference between a minimum temperature and a corresponding maximum temperature is about 5°C, and is relatively small, whereas in the first comparative example, the difference between a minimum temperature and a corresponding maximum temperature is about 32°C, and is relatively large.

As seen from FIG. 17, when a heater is placed on a holder made of a thermally conductive material (e.g., Al), a plurality of cells housed in the holder can be uniformly and efficiently warmed.

### INDUSTRIAL APPLICABILITY

The present disclosure is useful for a battery module that enables uniform and efficient warming of a plurality of cells for use in the battery module and includes battery blocks each including a holder in which the cells are housed.

### DESCRIPTION OF REFERENCE CHARACTERS

- 1: Cell
- 2, 2X: Holder
- 2x: Accommodation Portion
- 3, 3X: Heater
- 3x: Heater Portion
- 3y: Heater Portion
- 3z: Auxiliary Heater Portion
- 4: Positive Electrode Current Collector Plate
- 5: Negative Electrode Current Collector Plate
- 6: Battery Block
- 7: Plate
- 8, 9: Space
- 10, 10X: Spacer
- 11: Positive Electrode
- 12: Negative Electrode
- 13: Separator
- 14: Electrode Group
- 15: Positive Electrode Lead
- 16: Negative Electrode Lead
- 17: Battery Case
- 18: Sealing Body
- 19: Gasket
- 20: Positive Electrode Insulating Plate
- 21: Negative Electrode Insulating Plate
- S1: First Surface
- S2: Second Surface
- s1: Convex Portion

## Claims

1. A battery module comprising:
a plurality of battery blocks stacked in a first direction, wherein
the battery blocks each include
a plurality of cells (1), and
a holder (2) having accommodation portions in each of which one of the cells (1) is housed and which extend in a second direction orthogonal to the first direction, the holder (2) is made of a thermally conductive material, and has a first surface and a second surface opposite to each other in the first direction,
**characterized in that** a pair of heater portions (3) is placed on at least one of the first surface or the second surface so as to be spaced apart from each other in the second direction, and
a space (8) through which a cooling medium flows is defined between each adjacent pair of the holders (2) by the pair of heater portions (3).

2. The battery module of claim 1, wherein the pair of heater portions (3) extend in a third direction orthogonal to the second direction.

3. The battery module of claim 2, wherein the pair of heater portions (3) each extend from one end of the first surface in the third direction to the other end thereof.

4. The battery module of claim 1, wherein the heater (3) further includes an auxiliary heater portion placed on a central portion of the second surface.

5. The battery module of claim 1 further comprising: a pair of plates between which the battery blocks are sandwiched so as to be fixed.

6. The battery module of claim 1, wherein an outer circumferential surface of each cell is in contact with an inner circumferential surface of one of the accommodation portions.

7. The battery module of claim 1, wherein the holder (2) is made of aluminum, copper, or a resin to which aluminum oxide, titanium oxide, or aluminum nitride is added.

8. The battery module of claim 1, wherein
the accommodation portions are tubular pipes, and
each adjacent pair of the pipes are coupled together.

9. The battery module of claim 1, wherein the battery blocks are arranged in a matrix.

10. The battery module of claim 9 further comprising: a case in which the battery blocks are housed, wherein
the heater (3) is placed on a surface of the case in the axial direction, and
the case is interposed between surfaces of the holders (2) in the axial direction and the heater (3).

11. A battery block comprising:
a plurality of cells (1); and
a holder (2) having accommodation portions in each of which one of the cells (1) is housed and which extend in a first direction, wherein
an outer circumferential surface of each cell is in contact with an inner circumferential surface of one of the accommodation portions,
the holder (2) is made of a thermally conductive material, and has a first surface and a second surface opposite to each other in a second direction orthogonal to the first direction, and a third surface and a fourth surface opposite to each other in a third direction orthogonal to the first and second directions, **characterized in that** a pair of heater portions (3) is placed on at least one of the first surface or the second surface so as to be spaced apart from each other in the second direction, and
a space (8) through which a cooling medium flows is defined between each adjacent pair of the holders (2) by the pair of heater portions (3).

## Patentansprüche

1. Batteriemodul, umfassend:
eine Vielzahl von Batterieblöcken, die in einer ersten Richtung gestapelt sind,
wobei jeder Batterieblock enthält:
eine Vielzahl von Zellen (1), und
einen Halter (2), der Aufnahmeteile aufweist, in denen jeweils eine der Zellen (1) aufgenommen ist und die sich in einer zweiten Richtung orthogonal zu der ersten Richtung erstrecken,
wobei der Halter (2) aus einem wärmeleitenden Material ausgebildet ist und eine erste Fläche und eine zweite Fläche, die einander in der ersten Richtung gegenüberliegen, aufweist,
**dadurch gekennzeichnet, dass**:
ein Paar von Heizerteilen (3) auf der ersten Fläche und/oder der zweiten Fläche derart platziert sind, dass sie in der zweiten Richtung voneinander beabstandet sind, und
ein Raum (8), durch den ein Kühlmedium fließt, zwischen jedem benachbarten Paar von Haltern (2) durch das Paar von Heizerteilen (3) definiert wird.

2. Batteriemodul nach Anspruch 1, wobei sich das Paar von Heizerteilen (3) in einer dritten Richtung orthogonal zu der zweiten Richtung erstreckt.

3. Batteriemodul nach Anspruch 2, wobei sich das Paar von Heizerteilen (3) jeweils von einem Ende der ersten Fläche in der dritten Richtung zu dem anderen Ende erstreckt.

4. Batteriemodul nach Anspruch 1, wobei der Heizer (3) weiterhin einen zusätzlichen Heizerteil umfasst, der auf einem zentralen Teil der zweiten Fläche platziert ist.

5. Batteriemodul nach Anspruch 1, das weiterhin ein Paar von Platten umfasst, zwischen denen die Batterieblöcke eingeschlossen werden, um fixiert zu werden.

6. Batteriemodul nach Anspruch 1, wobei eine Außenumfangsfläche jeder Zelle in Kontakt mit einer Innenumfangsfläche eines der Aufnahmeteile ist.

7. Batteriemodul nach Anspruch 1, wobei der Halter (2) aus Aluminium, Kupfer oder einem Kunstharz, zu dem Aluminiumoxid, Titanoxid oder Aluminiumnitrid hinzugefügt ist, ausgebildet ist.

8. Batteriemodul nach Anspruch 1, wobei:
die Aufnahmeteile rohrförmige Rohre sind, und
jedes benachbarte Paar der Rohre miteinander gekoppelt ist.

9. Batteriemodul nach Anspruch 1, wobei die Batterieblöcke in einer Matrix angeordnet sind.

10. Batteriemodul nach Anspruch 9, das weiterhin ein Gehäuse, in dem die Batterieblöcke aufgenommen sind, umfasst,
wobei der Heizer (3) auf einer Fläche des Gehäuses in der Axialrichtung platziert ist, und
das Gehäuse zwischen Flächen der Halter (2) in der Axialrichtung und dem Heizer (3) angeordnet ist.

11. Batterieblock, umfassend:
eine Vielzahl von Zellen (1), und
einen Halter (2), der Aufnahmeteile aufweist, in denen jeweils eine der Zellen (1) aufgenommen ist und die sich in einer ersten Richtung erstrecken,
wobei eine Außenumfangsfläche jeder Zelle in Kontakt mit einer Innenumfangsfläche eines der Aufnahmeteile ist,
wobei der Halter (2) aus einem wärmeleitenden Material ausgebildet ist und eine erste Fläche und eine zweite Fläche, die einander in einer zweiten Richtung orthogonal zu der ersten Richtung gegenüberliegen, sowie eine dritte Fläche und eine vierte Fläche, die einander in einer dritten Richtung orthogonal zu den ersten und zweiten Richtungen gegenüberliegen, aufweist,
**dadurch gekennzeichnet, dass**:
ein Paar von Heizerteilen (3) auf der ersten Fläche und/oder der zweiten Fläche derart platziert sind, dass sie in der zweiten Richtung voneinander beabstandet sind, und
ein Raum (8), durch den ein Kühlmedium fließt, zwischen jedem benachbarten Paar von Haltern (2) durch das Paar von Heizerteilen (3) definiert wird.

## Revendications

1. Module de batterie comprenant :
une pluralité de blocs batterie empilés dans une première direction, où
les blocs batterie comprennent chacun :
une pluralité de cellules (1), et
un support (2) comportant des organes d'accueil dans chacun desquels est logée l'une des cellules (1) et qui s'étendent dans une deuxième direction orthogonale à la première direction,
le support (2) est constitué d'un matériau thermiquement conducteur et comporte une première surface et une seconde surface opposées l'une à l'autre dans la première direction,
**caractérisé en ce que**
une paire d'organes de chauffage (3) est placée sur au moins l'une de la première surface ou de la seconde surface de sorte à ce qu'ils soient écartés l'un de l'autre dans la deuxième direction, et
un espace (8) au travers duquel circule un milieu de refroidissement est défini par la paire d'organes de chauffage (3) entre chaque paire adjacente des supports (2).

2. Module de batterie selon la revendication 1, dans lequel la paire d'organes de chauffage (3) s'étend dans une troisième direction orthogonale à la deuxième direction.

3. Module de batterie selon la revendication 2, dans lequel les deux organes de chauffage (3) s'étendent chacun depuis une première extrémité de la première surface dans la troisième direction vers l'autre extrémité de celle-ci.

4. Module de batterie selon la revendication 1, dans lequel le dispositif de chauffage (3) inclut en outre un organe auxiliaire de chauffage placé sur la partie centrale de la deuxième surface.

5. Module de batterie selon la revendication 1, comprenant en outre : une paire de plaques entre lesquelles sont intercalés les blocs batterie de sorte à être fixés.

6. Module de batterie selon la revendication 1, dans lequel la surface circonférentielle externe de chaque cellule est en contact avec la surface circonférentielle interne de l'un des organes d'accueil.

7. Module de batterie selon la revendication 1, dans lequel le support (2) est constitué d'aluminium, de cuivre ou d'une résine à laquelle est ajouté de l'oxyde d'aluminium, de l'oxyde de titane ou du nitrure d'aluminium.

8. Module de batterie selon la revendication 1, dans lequel
les organes d'accueil sont des tuyaux tubulaires, et
chaque paire adjacente de tuyaux est accouplée.

9. Module de batterie selon la revendication 1, dans lequel les blocs batterie sont agencés selon une matrice.

10. Module de batterie selon la revendication 9, comprenant en outre : un boîtier dans lequel sont logés les blocs batterie, dans lequel
le dispositif de chauffage (3) est placé sur une surface du boîtier dans la direction axiale, et
le boîtier est intercalé entre des surfaces des supports (2), dans la direction axiale, et le dispositif de chauffage (3) .

11. Bloc batterie comprenant :
une pluralité de cellules (1), et
un support (2) comportant des organes d'accueil dans chacun desquels est logée l'une des cellules (1) et qui s'étendent dans une première direction,
la surface circonférentielle externe de chaque cellule est en contact avec la surface circonférentielle interne de l'un des organes d'accueil,
le support (2) est constitué d'un matériau thermiquement conducteur et présente une première surface et une deuxième surface opposées l'une à l'autre dans une deuxième direction orthogonale à la première direction, ainsi qu'une troisième surface et une quatrième surface opposées l'une à l'autre dans une troisième direction orthogonale aux première et deuxième directions,
**caractérisé en ce que**
une paire d'organes de chauffage (3) est placée sur au moins l'une de la première surface ou de la deuxième surface de sorte à ce qu'ils soient écartés l'un de l'autre dans la deuxième direction, et
un espace (8) au travers duquel circule un milieu de refroidissement est défini entre chaque paire adjacente de supports (2) par la paire d'organes de chauffage (3).
